# DEMANDE DE BREVET EUROPEEN

(11) **EP 0 547 975 A1**
(43) Date de publication de la demande: **23.06.1993**
(21) Numéro de dépôt: 92403457.2
(22) Date de dépôt: 17.12.1992
(51) Int. Cl.: G06F 12/14, G07F 7/10, H04L 9/32

(54) **Procédé d'authentification, par un milieu extérieur, d'un objet portatif connecté à ce milieu par l'intermédiaire d'une ligne de transmission, et système pour la mise en oeuvre**

(30) Priorité: 19.12.1991 FR 9115813
(71) Demandeur: BULL CP8, F-78430 Louveciennes (FR)
(72) Inventeur: Saada, Charles, F-78430 Louveciennes (FR); Oisel, André, F-78430 Louveciennes (FR); Lasnier, François, F-94000 Creteil (FR)
(74) Mandataire: Corlu, Bernard Edouard

(57) **Abrégé**

Pour authentifier un objet portatif (7) connecté à un terminal relié au milieu extérieur par une ligne de transmission, le milieu extérieur (1) gère une table de contrôle (11) contenant une donnée non secrète (N₇) propre à chaque objet susceptible d'être identifié, ainsi qu'un paramètre (Eₐ) et un résultat (Rₐ) rentrés dans la table de contrôle lors de l'authentification précédente de l'objet.

Un nouveau paramètre (E_{b}), élaboré par le milieu lors de l'authentification, sert à calculer un nouveau résultat (R_{b}) dans l'objet. L'ancien résultat est recalculé. En cas de coïncidence avec celui qui se trouve dans la table (11), l'objet est authentifié, et les nouveaux paramètre (E_{b}) et résultat (R_{b}) sont inscrits dans la table de contrôle, à la place des précédents.

Application : protection de réseaux informatiques.

## Description

L'invention est relative à un procédé d'authentification, par un milieu extérieur, d'un objet portatif, tel qu'une carte à microcircuits électroniques, connecté à ce milieu par l'intermédiaire d'une ligne de transmission, et à un système pour la mise en oeuvre du procédé.

De plus en plus de systèmes électroniques utilisent des objets portatifs, tels que des cartes à microcircuits électroniques, notamment pour assurer la sécurité des applications mises en oeuvre.

Par exemple, des systèmes de contrôle d'accès utilisent des objets portatifs. Ces systèmes comportent un dispositif (connecteur et lecteur) pour recevoir les objets portatifs et l'accès est autorisé lorsqu'un objet portatif habilité est présenté. L'opération réalisée dans ce cas est une authentification de l'objet portatif. Dans le domaine du contrôle d'accès, des procédés plus sophistiqués peuvent être mis en oeuvre: non seulement on peut exiger une authentification de l'objet, mais encore une identification de son porteur. Dans ce cas particulier, le porteur de l'objet doit entrer une donnée qui lui est propre (code confidentiel, reconnaissance de parole, reconnaissance d'empreinte).

Le contrôle d'accès est donc une application élémentaire des systèmes à objets portatifs, qui peut déjà être plus ou moins complexe.

Des objets portatifs peuvent être mis en oeuvre dans tous les systèmes traitant des données, confidentielles ou non. Dans ce cas, les objets portatifs peuvent être utilisés pour autoriser l'accès à des utilisateurs particuliers, soit par authentification de l'objet et/ou identification du porteur, et/ou encore, pour certaines applications traitant des données particulièrement confidentielles, il est envisagé que les données les plus sensibles soient mémorisées à l'intérieur même de l'un ou l'autre des objets portatifs à la disposition d'utilisateurs particuliers, ou chiffrées à partir d'algorithmes contenus dans les objets.

Tout ce qui vient d'être évoqué, sans être exhaustif, est généralement connu de l'homme du métier, sans qu'il soit nécessaire d'approfondir sur ce point.

On constate donc que, pour qu'un système exploitant des objets portatifs soit sûr, il faut qu'il soit en mesure de déterminer qu'un objet portatif qui lui est momentanément accouplé a bien été conçu à l'origine pour donner droit à l'accès à l'application réalisée par le système, c'est-à dire qu'il faut que le système authentifie l'objet portatif.

D'une façon générale, la plupart des applications qui mettent en oeuvre des objets portatifs, telles que des cartes à microcircuits, prennent en compte au moins une clé secrète spécifique de chaque application. Cette clé est préenregistrée d'une part dans tous les objets qui peuvent donner l'accès à l'application, et d'autre part dans tous les appareils auxquels peuvent être connectés ces objets, pour obtenir la délivrance d'un service, ou l'autorisation d'accès dans le cadre de cette application. Ces clés secrètes sont seules connues des organismes habilités qui délivrent les cartes et qui gèrent les appareils qui coopé- rent avec. Dans chacunes de ces applications, l'appareil vérifie préalablement que l'objet possède bien la même clé secrète que la sienne, sans pour autant di- vulguerde quelque façon que ce soit la valeur de cette clé.

Cette vérification s'effectue généralement par un échange d'informations entre l'objet et l'appareil, lors d'un dialogue.

Le dialogue peut consister à faire générer, par un appareil du système, un nombre aléatoire qui est ensuite envoyé vers les circuits de traitement de l'objet, puis à faire calculer par ces circuits un résultat qui est fonction au moins de ce nombre aléatoire et d'une clé secrètre préenregistrée dans la mémoire de l'objet, à transmettre ce résultat à l'appareil, et à le comparer avec un autre résultat, calculé par l'appareil, et qui est au moins fonction du même nombre aléatoire et d'une clé secrète préenregistrée dans l'appareil.

Cette vérification ou authentification de l'objet est satisfaite s'il y a concordance entre les deux résultats.

Bien entendu, cette concordance ne peut être obtenue qui si les clés secrètes mémorisées dans l'objet et dans l'appareil sont identiques d'une part, et si les algorithmes de calcul ou de traitement utilisés sont les mêmes d'autre part.

Afin d'interdire à tout fraudeur de fabriquer de faux objets, il est impératif de garder le caractère secret des clés utilisées, notamment au niveau des appareils qui sont accessibles au public. Généralement les clés secrètes sont enregistrées dans une zone de mémoire de l'appareil, qui est ensuite verrouillée pour en interdire l'accès depuis l'extérieur, cette zone n'étant accessible qu'en interne par les circuits de traitement de l'appareil. Il faut cependant admettre qu'une fraude, bien que limitée et techniquement délicate, est toujours possible et envisageable, et qu'un fraudeur cherchera à perçer le secret par des techniques évoluées, comme par exemple une lecture laser de la mémoire contenant les clés.

Pour remédier à cet inconvénient, le brevet français délivré sous le numéro 2 600 189 au nom de la demanderesse, prévoit un procédé dans lequel on n'utilise plus une clé secrète au niveau de l'appareil, et où on remplace cette clé par une information variable dans le temps, tout en permettant à l'appareil d'authentifier les objets ou cartes qui peuvent coopérer avec lui. L'utilisation d'informations variables complique la tache à un fraudeur, qui observerait à un instant donné les messages qui circulent dans le système, car il est vraisemblable que certaines des données qu'il aura pu relever lors de cette observation auront varié lorsqu'il voudra les réexploiter.

Cependant ce procédé suppose que l'ensemble des objets qui doivent être authentifiés possèdent tous la même clé secrète et le même algorithme de traitement, puisqu'un résultat précédemment calculé par un premier objet doit pouvoir être recalculé par un autre objet habilité.

De plus, bien que le procédé décrit dans ce brevet prévoie que le nombre aléatoire peut être changé régulièrement, un même nombre est utilisé au moins deux fois, une première lorsqu'il sert à établir un résultat de référence, et une seconde lorsqu'il sert à l'authentification ultérieure d'une autre carte.

Il en résulte qu'un fraudeur compétent qui observerait un échange de données entre le milieu extérieur et l'objet portatif pourrait tenter de reproduire cet échange pour tromper le système, en se connectant immédiatement après son observation.

Un tel risque de fraude par observation de l'échange de données existe tout particulièrement lorsque l'authentification de l'objet portatif est effectuée par un système dans lequel il existe une liaison non protégée, sur laquelle il est possible de se connecter physiquement. C'est par exemple le cas des réseaux d'ordinateurs, où l'authentification s'effectue à partir d'un ordinateur central, les objets portatifs étant connectés au niveau de chaque terminal; c'est encore le cas dans les systèmes de contrôle d'accès à des locaux, dans lesquels un dispositif de réception de l'objet portatif est disposé à chaque accès, et l'authentification s'effectue par un calculateur central auquel sont reliés les divers dispositifs proches de chaque accès.

Un autre inconvénient, qui est la conséquence de celui qui a été mentionné en premier (même code secret et même algorithme dans tous les objets portatifs), est le suivant: un objet portatif déterminé ne peut être utilisé que pour une seule application, puisque c'est l'utilisation d'un code secret spécifique à chaque application qui permet d'authentifier des objets. En d'autre termes, une même personne qui est appelée à utiliser plusieurs systèmes différents, doit posséder autant d'objets que de systèmes auxquels elle doit accéder.

L'utilisation d'un objet portatif spécifique pour une application est concevable dès lors que l'application implique par ailleurs une modification de la mémoire de l'objet portatif lors de certaines utilisations de celui-ci. C'est par exemple le cas des applications bancaires ou de tous autres types d'applications qui créent ou exploitent des fichiers dans la mémoire de l'objet portatif.

Par contre, dès lors que l'application nécessite une simple authentification de l'objet sans consommation notable de mémoire à chaque utilisation, on conçoit que l'emploi d'un objet portatif spécifique à chaque utilisation n'est pas la meilleure solution.

L'invention a pour objet de remédier à ces inconvénients.

Un premier but de l'invention est un procédé d'authentification d'objets portatifs par un milieu extérieur qui ne nécessite pas l'emploi d'un code-secret spécifique au niveau du dispositif d'authentification constitué par le milieu extérieur.

Un second but de l'invention est de permettre l'authentification par un milieu extérieur auquel l'objet portatif est relié par l'intermédiaire d'une ligne de communication quelconque, tout en interdisant à un fraudeur d'exploiter les informations qu'il recueillerait en se connectant sur cette ligne de communication.

Un troisième but de l'invention est de permettre que n'importe quel objet portatif comportant des circuits de traitement lui permettant d'effectuer un calcul, prenant en compte une donnée extérieure et une donnée secrète contenue dans sa mémoire, puisse être utilisé pour donner l'accès à n'importe quelles applications, tout en leur conférant une sécurité optimale.

Selon l'invention, un procédé d'authentification d'un objet portatif par un milieu extérieur, l'objet portatif étant connecté à un terminal relié à un milieu extérieur par l'intermédiaire d'une ligne de transmission, l'objet portatif comportant des circuits de traitement et une mémoire avec au moins une donnée secrète accessible par les seuls circuits de traitement de l'objet, et une donnée non secrète spécifique à cet objet, est caractérisé en ce qu'il consiste à:
- faire émettre par l'objet, en direction du milieu extérieur, sa donnée non secrète,
- faire retrouver grâce à cette donnée, par des circuits de traitement du milieu extérieur, dans un table de contrôle gérée de façon confidentielle par ce milieu, le résultat d'un calcul effectué lors de la dernière authentification de cet objet, et un premier paramètre ayant été pris en compte pour réaliser ce calcul,
- émettre ce premier paramètre en direction de l'objet,
- faire générer, par les circuits de traitement du milieu extérieur, un second paramètre et le transmettre à l'objet,
- faire calculer par les circuits de traitement de l'objet un premier résultat prenant en compte au moins le premier paramètre et la donnée secrète contenue dans cet objet et accessible par les seuls circuits de traitement de l'objet,
- faire calculer par les circuits de traitement de l'objet un second résultat prenant en compte au moins le second paramètre et la donnée secrète contenue dans l'objet,
- transmettre les premier et second résultats au terminal,
- chiffrer dans le terminal, l'ensemble constitué par les premier et second résultat, afin d'obtenir un troisième résultat, puis transmettre ce troisième résultat au milieu extérieur par la ligne de transmission, et le déchiffrer dans le milieu extérieur pour retrouver les premier et second résultats,
- comparer, dans le milieu extérieur, le premier résultat issu du déchiffrement avec le résultat du calcul effectué lors de la dernière authentification de cet objet et mémorisé dans la table de contrôle,
- considérer que l'objet est authentique en cas de coïncidence, et remplacer respectivement dans la table de contrôle le résultat du calcul effectué lors de l'authentification précédente par le second résultat calculé lors de l'authentification en cours et le premier paramètre par le second paramètre.

Selon une autre caractéristique de l'invention, le procédé comporte une phase préliminaire, effectuée sous contrôle du prestataire de service et constituant une première authentification de l'objet, chaque fois qu'un nouvel objet doit être validé pour autoriser l'accès à une application gérée par le milieu, phase au cours de laquelle les circuits de traitement de l'objet sont mis en relation avec les circuits de traitement du milieu extérieur, et au cours de laquelle la donnée non secrète, propre à l'objet est transmise au milieu extérieur, puis inscrite dans là table de contrôle, et au cours de laquelle un paramètre est fourni à l'objet et un résultat est alors calculé par l'objet, qui prend en compte au moins ce paramètre et la même donnée secrète utilisée pour calculer les premier et second résultats, et au cours de laquelle le paramètre et le résultat calculé à partir de ce paramètre sont mémorisés dans la table de contrôle, en correspondance avec la donnée non secrète propre à cet objet.

Un système pour la mise en oeuvre du procédé de l'invention est caractérisé en ce qu'il comporte un milieu extérieur gérant une table de contrôle, au moins un terminal relié à ce milieu extérieur par l'intermédiaire d'une ligne de transmission quelconque, le terminal comportant des moyens de connexion électrique et de dialogue avec un objet portatif amovible, cet objet contenant d'une part une mémoire avec au moins une donnée secrète, de même qu'une donnée non secrète spécifique à cet objet, et d'autre part des circuits de traitement pour effectuer des calculs sur cette donnée et sur des paramètres externes, le terminal comportant en outre des moyens pour chiffrer des résultats issus de l'objet portatif, et les transmettre vers le milieu extérieur, le milieu extérieur comprenant des moyens pour déchiffrer les messages chiffrés transmis par le terminal, et pour inscrire, sous certaines conditions, des informations dans la table de contrôle.

L'invention est particulièrement avantageuse, puisque tout objet portatif contenant une donnée non secrète qui lui est spécifique, et capable de chiffrer des paramètres extérieurs, à l'aide d'un algorithme et d'un nombre secret qu'il contient dans sa mémoire, peut être authentifié et utilisé comme moyen de contrôle d'accès à toute application.

Or, la plupart des objets portatifs contiennent généralement une donnée non secrète spécifique: il s'agit généralement du numéro de série de cet objet. Parailleurs, de plus en plus d'objets comprennent des circuits de traitement et une donnée secrète accessible uniquement par ces circuits de traitement. Il en résulte qu'à la limite, n'importe quel objet, dans la mesure ou il a été recensé ou validé lors d'une phase préliminaire, peut être utilisé comme moyen de contrôle d'accès.

En effet, il n'est absolument pas nécessaire que l'algorithme contenu dans l'objet ait une quelconque corrélation avec ceux du terminal et du milieu extérieur, puisque ce sont des résultats calculés par l'objet qui sont ensuite chiffrés dans le terminal, puis transmis en direction du milieu extérieur et déchiffrés dans ce dernier. Il suffit seulement que l'algorithme de déchiffrement contenu dans le milieu extérieur soit en correspondance avec l'algorithme de chiffrement du terminal.

D'autres caractéristiques et avantages de l'invention apparaitront ci-après, en regard de la description des figures sur lesquelles:
- la figure 1 illustre schématiquement un système pour la mise en oeuvre du procédé selon l'invention;
- les figures 2 et 3 montrent les éléments minima qu'un objet portatif doit posséder, et les traitements d'information qu'il doit être capable d'effectuer, pour pouvoir être utilisé avec l'invention.
- la figure 4 illustre un premier mode de mise en oeuvre de la phase préliminaire;
- la figure 5 illustre un second mode de mise en oeuvre de la phase préliminaire;
- la figure 6 montre la table de contrôle à l'issue de la phase préliminaire;
- la figure 7 illustre le principe du déroulement de la phase d'authentification;
- la figure 8 illustre une variante du déroulement de la phase d'authentification.

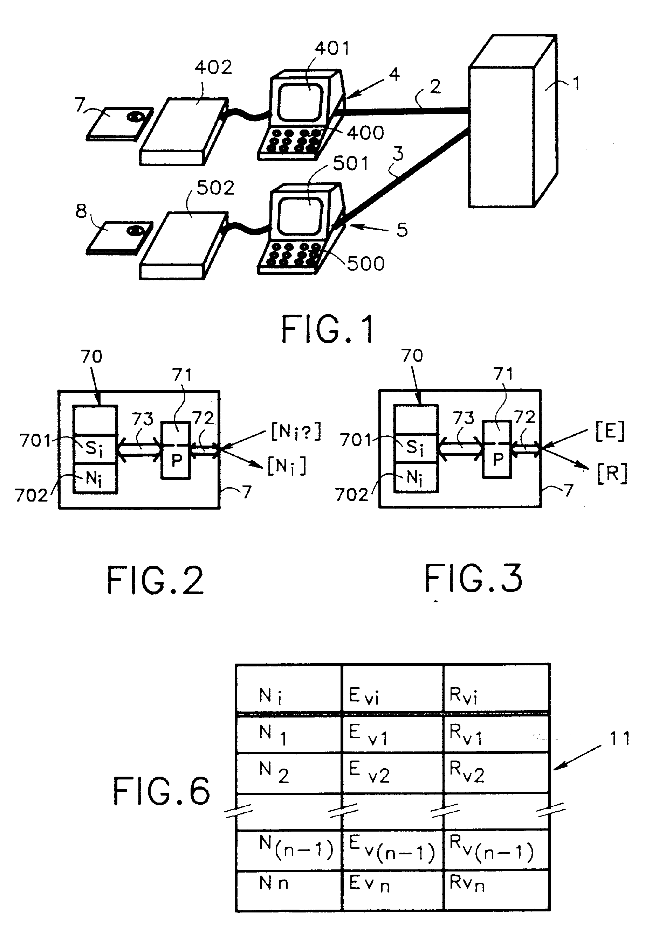

Sur la figure 1, le système comporte une unité centrale 1, connectée par l'intermédiaire de lignes de transmission 2,3, à plusieurs terminaux dont deux 4,5 ont été représentés sur la figure.

L'ensemble ainsi constitué peut réaliser une ou plusieurs applications, dépendant des programmes enregistrés au niveau de l'unité centrale 1 et des terminaux 4,5.

Dans l'exemple, chaque terminal comporte au moins une unité de traitement, non représentée sur la figure, et des moyens d'échange et de dialogue entre un utilisateur et l'unité de traitement. Ces moyens sont par exemple un clavier400, 500, et un écran 401, 501 prévus respectivement sur chaque terminal. De façon connue, chaque unité de traitement est en mesure de dérouler des programmes spécifiques qui sont soit enregistrés de façon permanente dans une mémoire de l'unité de traitement, soit chargés au fur et à mesure des besoins.

De plus, conformément à la présente invention, il est prévu des moyens pour que l'accès à tout ou partie des applications gérées par le système soit interdit sous certaines conditions à certains utilisateurs.

A cet effet, chaque terminal 4, 5 est associé à un dispositif de couplage et de connexion 402, 502 permettant un dialogue avec un objet portatif tel qu'une carte 7,8 à microcircuits électroniques. Ce dispositif sera appelé dispositif de couplage dans le reste de la description.

Dans l'exemple illustré, les dispositifs de couplage des objets portatifs sont représentés à l'extérieur du terminal correspondant. Ceci est envisageable lorsque le terminal et les dispositifs de couplage sont par exemple sous contrôle d'un représentant du prestataire de services.

Dans une variante, non représentée, mais envisageable lorsque le terminal n'est pas sous contrôle du prestataire de service, chaque dispositif de couplage 402, 502 des objets portatifs est incorporé à l'intérieur du terminal 4, 5 correspondant, et l'ensemble ainsi constitué est physiquement protégé, par exemple par blindage, ou par un dispositif de sécurité déclenchant une alarme dès lors qu'on tente de l'ouvrir, ou par tout autre moyen.

Ainsi, un tel agencement permet que l'accès à tout ou partie des applications gérées par l'unité centrale 1 soit subordonné à l'authentification préalable d'un objet portatif capable d'effectuer un minimum de fonctions et comportant, pour se faire, un minimum d'éléments.

Les figures 2 et 3 illustrent, de façon schématique, les éléments minima que doit comporter un objet portatif 7 pour pouvoir être utilisé dans un procédé d'authentification conforme à l'invention. En outre, ces figures illustrent respectivement deux types de traitements d'information que doit être capable d'effectuer le dit objet.

L'objet portatif représenté sur les figures 2 et 3 comporte des éléments mémoire 70, des circuits de traitement 71 et des moyens 72 de liaison et de communication électrique avec l'extérieur, constitués par un ou plusieurs conducteurs de liaison. De façon connue, ces moyens permettent d'assurer l'alimentation électrique des circuits de l'objet, à partir de l'extérieur et ils permettent l'échange des données entre l'objet et l'extérieur.

Dans le mode de réalisation illustré, l'objet portatif est une carte à microcircuits électroniques. Dans ce cas, les éléments mémoire 70, les circuits de traitement 71, et les moyens de communication 72 sont incorporés dans un support, par exemple en plastique au format d'une carte de crédit. La mémoire 70 et les circuits de traitement 71 sont réalisés sous forme de microstructures électroniques, monolithiques, pour que l'accès à la mémoire 70 s'effectue sous contrôle des circuits de traitement 71. Les moyens 72 de communication avec l'extérieur sont constitués par une association de fils conducteurs, reliés d'une part à des bornes de la microstructure électronique et d'autre part à des plages de contact accessibles de l'extérieur grace aux dispositifs de couplage.

La liaison entre les circuits de traitement 71 et la mémoire 70 a été schématisée par un bus interne 73.

Pour que l'objet illustré sur les figures 2 et 3 puisse être authentifié conformément à la présente invention, sa mémoire 70 contient au moins deux zones, une première 701, contenant une donnée secrète Si confidentielle, c'est-à-dire une donnée qui ne peut être ni lue ni modifiée de l'extérieur de l'objet, mais qui peut seulement être exploitée par ses circuits de traitement 71, et une seconde zone 702, qui contient une donnée non secrète Ni propre à cet objet, mais qui peut être lue de l'extérieur.

Avantageusement, la donnée non secrète Ni contenue dans cette seconde zone 702, et exploitée pour la mise en oeuvre de l'invention est le numéro de série de l'objet.

Cette solution est avantageuse car elle interdit que deux objets différents soient repérés par un même numéro dans la table de contrôle puisque les normes actuellement en vigueur sont telles que deux cartes fabriquées par un même fabriquant, ou deux cartes fabriquées par des fabriquants différents ne peuvent pas avoir le même numéro de série. En conséquence, n'importe quelle carte, comportant un circuit de traitement, une donnée secrète et un numéro de série, peut être utilisée comme moyen de mise en oeuvre de la présente invention.

Par ailleurs, les circuits de traitement 71 de l'objet contiennent un programme P, pour pouvoir effectuer certaines opérations lorsque l'objet est connecté à un milieu approprié, par l'intermédiaire d'un dispositif de couplage tel que l'un de ceux 402, 502 de la figure 1.

La première opération que doivent être en mesure d'effectuer les circuits de traitement 71 de l'objet est illustrée par la figure 2: sur requête du milieu extérieur, ses circuits de traitement doivent être en mesure de transmettre au milieu extérieur la donnée non secrète Ni contenue dans sa seconde zone 702 de mémoire 70.

Ceci est symbolisé sur la figure 2 de la manière suivante: une première flèche dirigée vers les moyens 72 de mise en communication de l'objet avec l'extérieur montre l'ordre entrant dans l'objet (demande de présentation de la donnée N_{;}, matérialisée par [N?] sur la figure) et une seconde flèche, sortant de l'objet, symbolise la sortie de la donnée Ni vers le milieu extérieur ([N] sur la figure).

La seconde opération que doivent être en mesure d'effectuer les circuits de traitement 71 de l'objet portatif est illustrée par la figure 3.

Sur requête du milieu extérieur, qui présente une donnée E (flèche [E] sur la figure), les circuits de traitement 71 de l'objet doivent pouvoir calculer un résultat R qui est fonction au moins de cette donnée extérieure E et du secret Si contenu dans la première zone 701 de la mémoire de l'objet, de sorte que R = F(S,E) (flèche [R] sur cette figure). F est la fonction particulière de calcul prise en compte par le programme P exécuté par les circuits de traitement 71.

Le procédé de l'invention comporte, on le rappelle, une phase préliminaire, et une phase d'authentification.

La phase préliminaire permet de recenser chaque objet portatif qui doit, par la suite, permettre l'accès à l'application gérée par le système. Cette phase consiste à documenter une table de contrôle du milieu extérieur, sous la surveillance du prestataire de service, afin de valider chaque nouvel objet.

La phase préliminaire comporte les étapes suivantes:
- tout d'abord, lorsqu'un nouvel objet est présenté en vue de son recensement pour des authentifications ultérieures, une requête est transmise à l'objet portatif, par le milieu extérieur, pour que l'objet fournisse au milieu la donnée non secrète qui lui est spécifique;
- ensuite le milieu extérieur génère un paramètre qui est transmis à l'objet pour que celui-ci calcule un résultat qui est fonction de ce paramètre et de la donnée secrète contenue dans la mémoire de l'objet et transmette ce résultat au milieu extérieur;
- enfin la donnée non secrète spécifique à l'objet, le paramètre et le résultat sont inscrits dans la table de contrôle en correspondance les uns avec les autres.

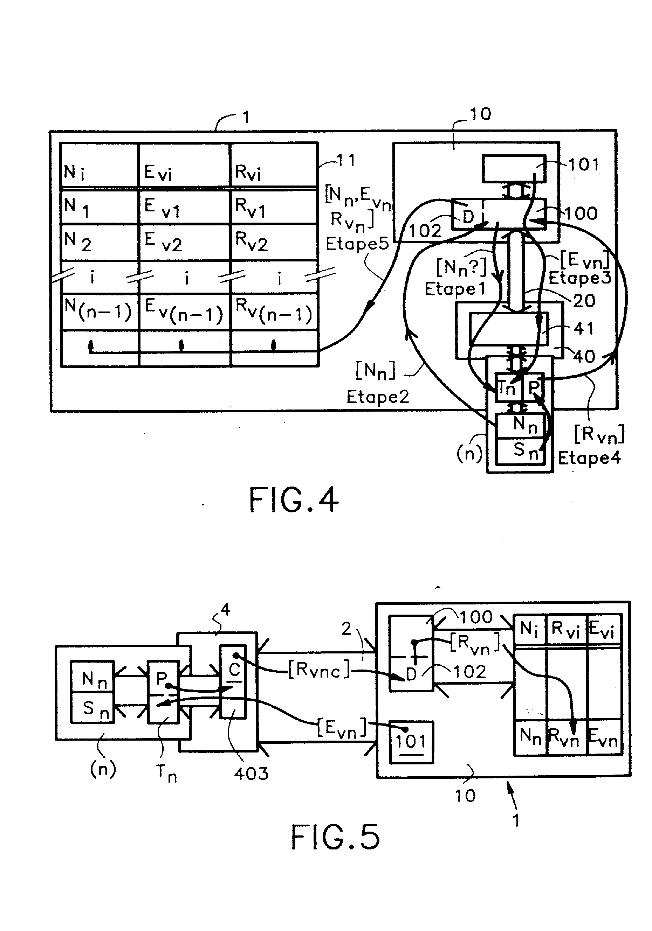

La figure 4 illustre un mode de mise en oeuvre de la phase préliminaire, lorsque l'objet portatif (n) à valider est directement en communication avec le milieu extérieur 1, ou bien encore lorsque cet objet est connecté à un terminal 40 relié au milieu extérieur 1, par une liaison 20 physiquement protégée. C'est le cas lorsque le terminal est à proximité de l'unité centrale, par exemple dans le local du prestataire de services. Le terminal comporte des circuits de traitement 41.

L'unité centrale 1, constituant le milieu extérieur comporte un module de traitement 10, avec des circuits de traitement 100, un générateur 101 de paramètre, tel qu'un générateur de nombres aléatoires ou pseudo-aléatoires.

En outre, le milieu extérieur 1 est relié à des terminaux 4, 5 par l'intermédiaire de lignes de transmission 2, 3 quelconques, qui ont déjà été décrites en regard de la figure 1.

Par ailleurs, le milieu extérieur 1 gère la table de contrôle 11 dont il vient d'être fait mention.

Les circuits de traitement 100 du module 10 comportent un programme de déchiffrement D enregistré dans une zone 102 de ce module 10. Le programme de déchiffrement est pris en compte par les circuits de traitement 100 au cas où la phase préliminaire s'effectue alors que l'objet portatif est connecté à un terminal relié au milieu extérieur 1 par une ligne non protégée, et lors des phases ultérieures d'authentification.

Sur cette figure 4, des liaisons électriques existant entre les divers éléments sont représentées par des doubles flèches; les différents flux d'informations qui transitent par l'intermédiaire de ces liaisons électriques pendant une phase préliminaire pour recenser un (n)ième objet portatif y sont représentés par des flèches simples indiquant leur point de départ d'un élément et leur point d'arrivée dans un autre; les étapes principales d'une phase préliminaire y sont mentionnées.

Avant la validation de ce (n)ième objet, la table de contrôle 11 ne contient que des informations relatives au (n-1) éléments précédents, c'est-à-dire qu'elle contient les n-1 données non secrètes Ni spécifiques aux n-1 objets déjà validés, et en regard de chacune de ces données, la table de contrôle 11 comporte pour chaque objet un paramètre Ev et un résultat Rvᵢ ayant été calculé par prise en compte du paramètre correspondant. A chaque authentification d'un objet, la donnée non secrète Ni spécifique à chaque objet n'est pas modifiée dans la table de contrôle, mais par contre la valeur du paramètre Ev et la valeur du résultat Rvᵢ associés à cet objet sont modifiées, comme il sera expliqué ultérieurement.

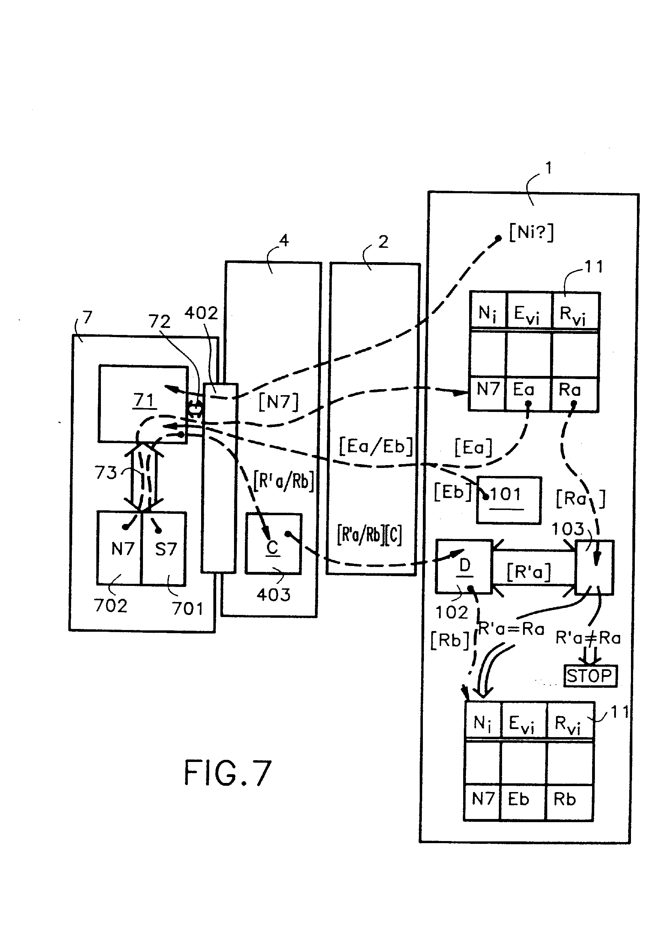

Au cours de l'étape 1, les circuits de traitement 100 du milieu extérieur 1 émettent une requête [Nₙ?] en direction de l'objet portatif (n) pour que la donnée non secrète Nₙ spécifique à cet objet soit transmise au milieu extérieur. Cette donnée est transmise [N_{n]} par exemple lors de l'étape 2. Ensuite, au cours de l'étape 3, un paramètre E_{Vn} est élaboré par le circuit 101 générateur du milieu extérieur 1, et est transmis en direction des circuits de traitement Tn de l'objet pour que ceux-ci, en réponse, calculent un résultat R_{Vn} qui est fonction de la donnée secrète Sₙ propre à l'objet et du paramètre E_{Vn} reçu, de sorte que: R_{Vn} = F (Sₙ,Evₙ). Ce résultat est transmis au milieu extérieur 1 (étape 4) et, à la suite de celà (étape 5), la donnée non secrète Nₙ propre à l'objet, le paramètre Evₙ et le résultat Rvₙ sont inscrits dans la table de contrôle 11. Celle-ci contient alors les éléments qui apparaissent sur la figure 6.

Il faut que la phase préliminaire se déroule sous contrôle d'un représentant du prestataire de services, qu'au doit entre autres initialiser le système pour qu'au moins le milieu extérieur soit placé dans une position de travail telle que les informations relatives à un nouvel objet puissent être écrites dans la table de contrôle.

La figure 5 illustre une variante mise en oeuvre lorsque la phase préliminaire se déroule alors qu'un objet portatif (n) est connecté à un terminal 4 relié au milieu extérieur 1 par l'intermédiaire d'une ligne de transmission 2 quelconque pouvant donc être épiée.

Dans ce cas, le résultat R_{Vn}, calculé par les circuits de traitement de l'objet portatif, est chiffré par les circuits de traitement du terminal, qui exécutent un programme de chiffrement C enregistré dans leur mémoire, avant d'être transmis sous forme chiffrée [Rvₙc] sur la ligne de transmission 2 vers le milieu extérieur. Après sa réception par le milieu extérieur, le résultat chiffré est déchiffré par les circuits de traitement 102 de ce milieu 1, par exécution du programme de déchiffrement D qui a été mentionné auparavant.

Après déchiffrement, le milieu extérieur retrouve donc le résultat initial R_{Vn}, tel qu'il a été calculé par l'objet portatif, et peut l'inscrire dans la table de contrôle 11 en regard de la donnée non secrète Nₙ spécifique à l'objet et du paramètre E_{Vn} qui a servi au calcul du résultat R_{Vn} dans l'objet portatif.

Par contre, le paramètre E_{Vn} est transmis en clair du milieu extérieur 1 vers l'objet portatif (n), par l'intermédiaire de la ligne de transmission et du terminal 4; de même la donnée non secrète Nₙ, spécifique à l'objet est transmise en clair entre l'objet et le milieu extérieur, par l'intermédiaire du terminal et de la ligne de transmission.

Il a précédemment été évoqué le fait que la donnée non secrète spécifique à l'objet, utilisée pour la reconnaissance dans la table de contrôle est le numéro de série de l'objet.

Cependant, dans une variante non illustrée, on envisage que ce n'est pas le numéro de série de l'objet qui est utilisé, mais un numéro spécifique propre à l'application, généré par exemple par le milieu extérieur 1 dès le début de la phase préliminaire, et inscrit d'une part par les circuits de traitement de l'objet, dans sa mémoire non secrète, sur requête du milieu extérieur, et d'autre part dans la table de contrôle. Ceci entraine néanmoins une consommation supplémentaire de mémoire, et nécessite que les circuits de traitement du milieu extérieur soient configurés pour gérer et produire les numéros destinés à chaque objet qui devra être authentifié.

Ainsi qu'il a été évoqué, de préférence, le paramètre servant de base au calcul dans l'objet portatif est un nombre aléatoire, élaboré par un générateur 101 de nombres aléatoires ou pseudo-aléatoires, faisant partie du module 10 du milieu extérieur 1. Ainsi, la connaissance, par un fraudeur qui observerait les lignes de transmission, des paramètres antérieurement émis en direction des objets portatifs successivement connectés au milieu extérieur ne lui permet pas de prédéterminer le paramètre transmis au prochain objet portatif qui sera connecté au système.

Les éléments représentés sur la figure 5, nécessaires à la réalisation de la phase préliminaire, lorsque l'objet portatif (n) est connecté à l'un des terminaux 4,5 relié au milieu extérieur par l'intermédiaire d'une ligne de transmission 2, 3 quelconque, sont identiques à ceux qui sont nécessaires à une phase d'authentification réalisée conformément à la présente invention.

Par contre, les flux d'informations ou de données qui sont représentés sur la figure 5 diffèrent de ceux qui apparaissent lors d'une phase d'authentification.

Ces derniers sont mis en évidence sur la figure 7, qui est structurée de façon à faire apparaître de haut en bas, une chronologie possible des échanges d'informations à l'intérieur du système pendant la phase d'authentification, en regard des éléments du système qui sont mis en oeuvre lors de chaque échange.

Les circuits d'un objet portatif 7, tel qu'une carte à microcalculateur, sont reliés à ceux T d'un terminal 4 par l'intermédiaire d'un dispositif de couplage 402. Les circuits de traitement T du terminal sont par ailleurs mis en relation avec les circuits de traitement 10 du milieu extérieur 1 par l'intermédiaire d'une ligne de transmission 2 quelconque. Un algorithme de chiffrement C est enregistré dans une zone 403 de mémoire du terminal 4 pour chiffrer les données entre le terminal et le milieu extérieur 1. Les circuits de traitement 10 du milieu extérieur gèrent la table de contrôle 11. Ils comportent le générateur de nombres aléatoires 101, des circuits de déchiffrement 102, un circuit de comparaison 103 dont la fonction sera expliquée ultérieurement.

L'objet portatif 7 comporte une zone 701 avec une donnée secrète S₇ propre à cet objet et une zone 702 avec la donnée non secrète N₇ spécifique à cet objet, telle que son numéro de série.

En supposant que cet objet 7 ait préalablement été recensé lors d'une phase préliminaire, ou ait déjà été authentifié, la table de contrôle 11 comporte des informations relatives à cet objet: il s'agit de sa donnée non secrète N₇, d'un paramètre Ea et d'un résultat Ra qui ont été inscrits lors de la phase préliminaire, si l'objet n'a pas été authentifié depuis, ou lors de la dernière authentification de cet objet comme il sera expliqué ci-après.

Après que l'objet 7 ait été connecté, les circuits de traitement 10 du milieu extérieur émettent une requête [N?] transmise par l'intermédiaire de la ligne 2 de transmission et des circuits de traitement T du terminal 4 à l'objet portatif, pour que la donnée non secrète N₇ spécifique soit émise.

En réponse, les circuits de traitement 71 de l'objet transmettent [N_{7]} la donnée N₇ non secrète en direction du milieu extérieur 1 par l'intermédiaire du terminal et de la ligne de transmission 2. Grâce cette donnée non secrète reçue, les circuits de traitement 10 du milieu extérieur retrouvent dans la table de contrôle la valeur du paramètre Ea et du résultat Ra inscrits en correspondance avec cette donnée non secrète, lors de la dernière authentification ou lors de la validation de l'objet.

A ce stade, il convient de noter que si la table de contrôle ne contient pas la valeur de la donnée non secrète de l'objet, parce qu'il n'a pas été validé lors d'une phase préliminaire, alors le processus d'authentification s'arrête immédiatement.

Après réception de la donnée non secrète et détermination du paramètre Ea et du résultat Ra antérieurs, le générateur 101 élabore un second paramètre Eb. Le paramètre antérieur Ea et le second paramètre Eb sont alors transmis en clair [Ea/Eb] en direction des circuits de traitement 71 de l'objet, par l'intermédiaire de la ligne 2 et du terminal. Les circuits de traitement de l'objet calculent alors deux résultats, un premier R'a qui est fonction du paramètre antérieur Ea et de la donnée secrète S₇ contenue dans la première zone 701 de mémoire de l'objet, et un second Rb, qui est fonction du paramètre Eb qui vient d'être calculé par le générateur 101 et de la même donnée secrète S₇ contenue dans la zone 701 de l'objet. Ces deux résultats R'a et Rb sont alors transmis aux circuits de traitement du terminal dans lesquels on leur applique l'algorithme de chiffrement C contenu dans la zone spécifique 403 du terminal. Un troisième résultat unique chiffré [R'a/Rb][c] qui est fonction des deux résultats calculés par l'objet est alors transmis aux circuits de traitement 10 du milieu extérieur 1, par l'intermédiaire de la ligne de transmission 2, pour y être déchiffré.

Le déchiffrement permet de retrouver les deux résultats R'a, Rb tels qu'ils ont été calculés par les circuits de traitement 71 de l'objet avant d'être envoyés au terminal 4 en vue de leur chiffrement.

Si l'objet utilisé est authentique, et a donc servi à documenter la table de contrôle lors d'une opération précédente, alors le premier résultat R'a calculé par prise en compte du paramètre Ea antérieurement inscrit dans la table de contrôle correspond au résultat Ra inscrit dans la table de contrôle. Les circuits de comparaison 103 contenus dans les circuits de traitement du milieu extérieur 1 effectuent la comparaison entre cette valeur du résultat Ra contenu dans la table de contrôle 11 et le résultat déchiffré R'a qui a été calculé par prise en compte du même paramètre.

En cas de concordance, les circuits du traitement 10 du milieu extérieur considèrent alors que l'objet portatif 7 est authentique. Dans ce cas, le second résultat Rb déchiffré, qui correspond nécessairement au second résultat calculé par l'objet lors de la présente authentification est alors inscrit dans la table de contrôle 11 à la place du résultat antérieur, et le paramètre Eb déterminé lors de la session d'authentification en cours, et qui a servi à obtenir ce second résultat dans l'objet, est également inscrit à la place du paramètre Ea qui avait été inscrit lors de la validation ou de l'authentification antérieure.

Par contre, si la concordance n'est pas obtenue, alors le processus d'authentification est stoppé. En effet, cela signifie soit que l'objet utilisé n'est pas authentique, soit qu'une erreur est survenue pendant la transmission entre le terminal et le milieu extérieur.

Néammoins, un problème risque de survenir, qui n'est pas inhérent au procédé de l'invention, mais dépend uniquement de la procédure de chiffrement/déchiffrement utilisée. La sécurité des applications mettant en oeuvre de telles procédures repose en fait souvent sur l'utilisation d'algorithmes prenant en compte des informations ou clés constituées d'un nombre élevé de bits, ceci pour éviter que les clés puissent être facilement découvertes. Il en résulte parfois que le système spécifiquement prévu pour déchiffrer le message, c'est-à-dire celui qui possède les bonnes clés et algorithmes, met un temps relativement long (de l'ordre de quelques secondes ou dizaines de secondes), pour déchiffrer les messages, ce qui n'est pas totalement satisfaisant, ne serait-ce que sur le plan psychologique, pour l'utilisateur.

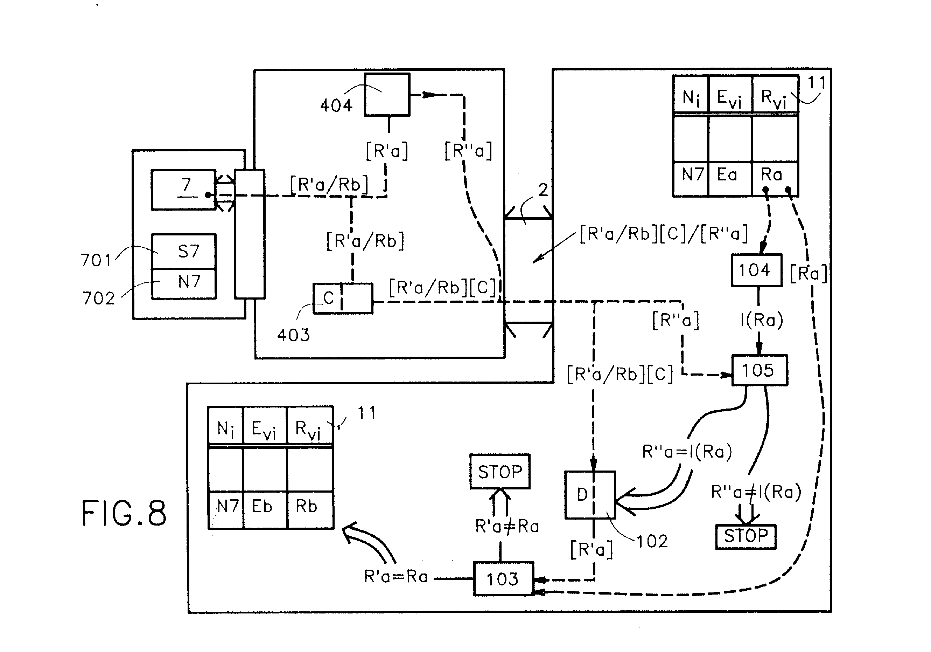

Une variante de mise en oeuvre du procédé de l'invention, dont les principaux aspects sont mis en évidence sur la figure 8, permet de remédier à cet inconvénient potentiel.

Les étapes de cette variante sont identiques à celles de la variante de la figure 7 jusqu'au moment où les deux résultats R'a et Rb calculés par l'objet portatif sont transmis au terminal 4 en vue de leur chiffrement. Elles ne seront donc pas décrites à nouveau.

Selon cette variante, de plus, le premier résultat R'a calculé à partir du secret contenu dans l'objet 7 et du paramètre Ea mémorisé dans la table de contrôle lors de la dernière authentification de l'objet, subit, dans une partie 404 dédiée des circuits du terminal 4, un traitement particulier, prédéterminé, de façon à constituer une image R"a de ce premier résultat R'a, qui est transmise en direction du milieu extérieur, en association avec le message chiffré [R'a/Rb][c] issu du chiffrementdes deux résultats R'a, Rb qui viennent d'être calculés par l'objet portatif.

Ainsi, le milieu extérieur recoit un message global [R'a/Rb][c]/[R"a] constitué par l'association du troisième résultat (chiffrement des deux résultats calculés par l'objet) et de l'image R"a du premier résultat R'a.

Après réception, ce message global est décomposé par les circuits de traitement du milieu extérieur de façon à séparer les messages chiffrés [R'a/Rb][c] et l'image R"a du premier résultat R'a.

Ensuite, des circuits 104 du milieu extérieur élaborent, selon les mêmes règles, une image I(Ra) du résultat Ra stocké dans la table de contrôle lors de la dernière authentification. Cette image est comparée dans un comparateur 105 avec celle R"a du premier résultat R'a. Si l'objet est authentique, le résultat Ra qui se trouve dans la table de contrôle est équivalent au résulat R'a calculé sur la base du paramètre de la dernière authentification, et en conséquence, l'image I(Ra) de ce résultat Ra de la table de contrôle est identique à celle R"a du premier résultat R'a calculé lors de l'authentification en cours.

En cas de vérification positive, alors l'accès est autorisé et l'utilisateur peut continuer à dialoguer avec le système. Néanmoins, le déchiffrement 102 de la partie chiffrée a lieu pour retrouver les deux résultats calculés par l'objet portatif lors de l'authentification en cours, et une comparaison 103 est effectuée entre la totalité du premier résultat R'a calculé et le résultat Ra contenu dans la table de contrôle. En cas de coïncidence, alors le résultat Rb calculé à partir du paramètre Eb élaboré par le générateur 101 du milieu extérieur et du secret S₇ contenu dans l'objet est inscrit dans la table de contrôle à la place du résultat Ra mémorisé lors de l'authentification précédente; par ailleurs, le paramètre Eb élaboré lors de l'authentification en cours est inscrit à la place du paramètre Ea, inscrit lors de l'authentification précédente.

En cas de non-concordance lors de cette dernière comparaison, les opérations sont interrompues et l'objet est invalidé, puisque non authentifié.

On rappelle que le fait d'autoriser temporairement la connexion après comparaison réussie des images a surtout un effet psychologique sur l'utilisateur honnête, qui ne doit pas attendre que la totalité des opérations de vérification soit terminée, tout en n'empêchant pas que la vérification ultérieure sur la totalité des résultats puisse éventuellement conduire à la coupure de la connexion.

Dans une mise en oeuvre, l'image R"a du premier résultat R'a est constituée par une partie de ce premier résultat, par exemple un nombre déterminé de bits pris selon une règle précise parmi ceux que comporte ce premier résultat. A titre d'exemple, si un résultat comporte m bits, les n premiers peuvent être pris, ou n bits pris parmi la totalité m que comporte ce résultat, par exemple un ou plusieurs bits successifs sur deux ou trois, ou toute autre association ou combinaison de bits.

Dans une autre mise en oeuvre, l'image R"a du premier résultat R'a est obtenue en effectuant une transformation, de préférence simple, du premier résultat, et la vérification de cette image, au niveau du milieu extérieur consiste à transformer, de la même manière le résultat Ra mémorisé dans la table de contrôle lors de la précédente authentification, et à comparer l'image du premier résultat R'a avec l'image I(Ra) ainsi obtenue du résultat Ra mémorisé lors de l'authentification précédente, ces deux images étant identiques si l'objet utilisé est authentique.

Ainsi, par exemple, la transformation du premier résultat Ra en vue d'obtenir une image R"a peut consister à scinder ce premier résultat en au moins deux parties, et à effectuer une opération logique entre ces parties, telle qu'un OU EXCLUSIF, un ET, un OU, et la vérification consiste à effectuer la même opération sur le résultat Ra mémorisé lors de l'authentification précédente puis à effectuer la comparaison.

Il n'est pas nécessaire que l'objet portatif traite les paramètres Ea, Eb simultanément pour fournir les deux résultats R'a, Rb successifs. Par contre, il est primordial que les circuits de chiffrement 403 du terminal soient en mesure de traiter d'une façon globale les deux résultats calculés par l'objet portatif, pour donner un seul et unique message chiffré qui estfonc- tion de ces deux résultats.

Les paramètres ou données exploités par des objets portatifs ont généralement des formats de 32 ou de 64 bits, c'est-à-dire des formats relativement petits. C'est pourquoi, de préférence et de façon connue, au moment du chiffrement, en vue de la transmission sur la ligne 2, on associe aux résultats transmis par l'objet portatif au terminal des données aléatoires, pour augmenter artificiellement le nombre de bits ou d'octets transmis, afin d'éviter qu'un fraudeur découvre rapidement les règles de déchiffrement.

Le choix des algorithmes de chiffrement ou de déchiffrement dépend de l'application mise en oeuvre. Ainsi, on peut utiliser des algorithmes symétriques ou à clé secrète (du type TELEPASS, DES), où une seule et unique clé est utilisée à la fois par des circuits de chiffrement du terminal et par les circuits de déchiffrement du milieu extérieur. Dans ce cas, la sécurité de l'application repose sur la confidentialité de la clé des deux côtés, et suppose notamment qu'il soit impossible d'accéder aux circuits du terminal pour tenter d'aller lire la clé.

C'est pourquoi, de préférence, lorsqu'il est difficile de surveiller les terminaux, lors de leurs temps de non utilisation, le procédé de l'invention utilise un algorithme à clé publique qui met en oeuvre un système de chiffrement/déchiffrement dissymétrique, tel que le sytème RSA créé par RIVEST, SHAMIR et ADLE-MAN.

On rappelle que dans un système à clé publique, les opérations de chiffrement et de déchiffrement sont différentes, de sorte qu'il est tout à fait envisageable de diffuser la procédure de chiffrement tout en gardant celle du déchiffrement secrète, sans menacer la sécurité du système. Un tel système est moins vulnérable qu'un système à clé secrète.

Ainsi, on peut enregistrer sans précaution particulière l'algorithme de chiffrement dans les circuits 403 de chiffrement du terminal, à condition bien sûr que les circuits de traitement du milieu extérieur soit protégés pour que l'algorithme de déchiffrement et la table de contrôle restent confidentiels. Ceci ne pose pas de problème, puisque le milieu extérieur 1 sera généralement sous contrôle du prestataire de service ou de toute autre autorité, étant donné qu'il s'agira généralement d'un calculateur central.

Par ailleurs, un système pour la mise en oeuvre du procédé de l'invention permet d'utiliser des objets portatifs possédant éventuellement un moyen de chiffrement symétrique, mais disposant d'une sécurité physique très importante, puisque chaque objet portatif doit contenir une donnée secrète Si dans une zone 701 accessible par les seuls circuits de traitement 71 de l'objet.

Bien entendu, d'autres opérations annexes, à la portée de l'homme du métier, peuvent être nécessaires pour mettre en oeuvre le procédé de l'invention.

En particulier, les objets portatifs, tels que des cartes à microcalculateurs, peuvent contenir des masques différents et/ou avoir, pour un même masque, différentes organisations de mémoire ("map- ping" en anglais), de sorte que la structure de la mémoire et le dialogue entre ces objets et le milieu extérieur peuvent être différents d'un objet à l'autre. En conséquence, de préférence, le milieu extérieur, avant toute autre opération, qu'il s'agisse de la phase préliminaire ou de la phase d'authentification proprement dite, lancera une procédure de test pour déterminer comment l'objet en présence duquel il se trouve est organisé, afin d'élaborer ses requêtes ultérieures de façon appropriée. Le terminal devra également être adapté pour pouvoir être utilisé avec tout type de masque.

Atitre d'exemple, pour un objet donné, le numéro de série peut être inscrit à une adresse déterminée de la mémoire de l'objet alors que, pour un autre objet, il sera inscrit à une autre adresse. Or, pour certains types de masques (et donc de programmes de traitement inscrits dans les objets), la requête pour la fourniture du numéro de série au milieu extérieur peut constituer en un ordre de lecture spécifiant l'adresse où se situe le numéro de série. Il est donc nécessaire que le milieu extérieur connaisse l'organisation mémoire et/ou le masque en présence duquel il se trouve, pour établir sa requête de façon appropriée.

De même, les autres requêtes devront être appropriées. Ainsi, les ordres de calcul à partir des paramètres Ea, Eb contenus dans la table de contrôle ou élaborés lors de la procédure d'authentification en cours par le générateur 101 de nombre aléatoire, devront être adaptés au masque et donc au programme contenu dans l'objet portatif.

Une application possible et particulièrement intéressante de l'invention est, par exemple, l'authentification d'objets portatifs quelconques pour donner l'accès à tout système de traitement d'informations, complexe ou non, structuré en réseau autour d'un ordinateur ou calculateur central (réseaux informatiques). Ainsi, on peut envisager que chaque utilisateur d'un tel réseau puisse accéder aux applications (traitement d'informations, accès à des locaux, commande de processus, etc) gérées par ce réseau, non pas à l'aide d'une carte spécifique, mais à l'aide de n'importe quelle carte dont il dispose par ailleurs (carte bancaire ou autre), et qui possède des circuits de traitement, après que, bien entendu, cette carte ait été recensée lors d'une phase préliminaire. Dans ce cas, chaque terminal est soit l'une des unités de traitement du réseau (s'il s'agit d'un réseau informatique complexe), soit un dispositif simplifié, et le milieu extérieur est constitué par un ordinateur central, ou par un dispositif dédié à l'authentification des objets.

D'autres modifications, adaptations ou applications du procédé de l'invention sont bien entendu à la portée de l'homme du métier, sans qu'il soit nécessaire de détailler davantage ces aspects particuliers.

## Revendications

1. Procédé d' authentification d'un objet portatif (7) par un milieu extérieur (1), l'objet portatif étant connecté à un terminal (4,5) relié au milieu extérieur (1) par l'intermédiaire d'une ligne de transmission (2,3), l'objet portatif comportant des circuits de traitement et une mémoire avec au moins une donnée secrète (S,, Sₙ, S₇) accessible par les seuls circuits de traitement de l'objet, et une donnée non secrète (N,, Nₙ, N₇) spécifique à cet objet, caractérisé en ce qu'il consiste à:
- faire émettre par l'objet, en direction du milieu extérieur, la donnée non secrète spécifique à cet objet,
- faire retrouver grâce à cette donnée, par des circuits de traitement (10) du milieu, dans un table de contrôle (11) gérée par le milieu extérieur, le résultat (Ra) d'un calcul effectué lors de la dernière authentification de cet objet, et un premier paramètre (Ea) ayant été pris en compte pour réaliser ce calcul,
- faire émettre ce premier paramètre (Ea) en direction de l'objet,
- faire générer par un générateur (101) u milieu extérieur, un second paramètre (Eb) et le transmettre à l'objet,
- faire calculer par les circuits de traitement de l'objet un premier résultat (R'a) prenant en compte au moins le premier paramètre (Ea) et la donnée secrète contenue dans l'objet,
- faire calculer par les mêmes circuits de traitement un second résultat (Rb) prenant en compte au moins le second paramètre (Eb) et la donnée secrète,
- transmettre les premier et second résultats au terminal,
- chiffrer, dans le terminal, l'ensemble constitué par les premier et second résultats, afin d'obtenir un troisième résultat, et transmettre ce troisième résultat au milieu extérieur par l'intermédiaire de la ligne de transmission (2,3),
- déchiffrer ce troisième résultat dans le milieu extérieur pour retrouver les premier et second résultats,
- comparer au niveau du milieu extérieur, le premier résultat issu du déchiffrement avec le résultat du calcul effectué lors de la dernière authentification de cet objet, et mémorisé dans la table (11) de contrôle,
- considérer que l'objet est authentique en cas de concordance, et remplacer dans ce cas, dans la table de contrôle le résultat du calcul effectué lors de l'authentification précédente par le second résultat déchiffré par le milieu extérieur, et remplacer le premier paramètre par le second paramètre généré lors de l'authentification en cours.

2. Procédé selon la revendication 1, caractérisé en ce qu'il comporte une phase préliminaire, constituant une première authentification de l'objet, effectuée sous contrôle du prestataire de l'application, chaque fois qu'un nouvel objet doit être validé pour autoriser l'accès à une application gérée par le milieu extérieur, et au cours de laquelle les circuits de traitement de l'objet sont mis en relation avec les circuits de traitement du milieu extérieur, et au cours de laquelle la donnée non secrète, propre à l'objet est inscrite dans la table de contrôle, et au cours de laquelle un paramètre (En) est fourni à l'objet et un résultat est alors calculé par les circuits de traitement de l'objet prenant en compte au moins ce paramètre et la donnée secrète mémorisée dans l'objet, et au cours de laquelle le paramètre et le résultat ainsi calculés sont mémorisés dans la table de contrôle, en correspondance avec la donnée non secrète propre à l'objet.

3. Procédé selon la revendication 2, caractérisé en ce que la phase préliminaire est exécutée en connectant directement l'objet portatif au milieu extérieur.

4. Procédé selon la revendication 2, caractérisé en ce que la phase préliminaire est effectuée en connectant l'objet portatif à l'un des terminaux (4,5) destinés à recevoir des objets en vue de leurs authentifications, et en ce que le résultat calculé par l'objet est transmis au terminal, puis chiffré dans celui-ci, en ce que le résultat chiffré est transmis au milieu extérieur par l'intermédiaire de la ligne de transmission, puis déchiffré au niveau du milieu extérieur, avant d'être inscrit dans la table de contrôle en correspondance avec la donnée non secrète et avec le paramètre élaboré par les circuits de traitement du milieu extérieur.

5. Procédé selon la revendication 1, caractérisé en ce qu'il consiste à faire élaborer par les circuits de traitement du terminal, selon une règle déterminée, une image (R"a) du premier résultat (R'a), après réception de ce premier résultat par ces circuits de traitement, et à transmettre au milieu extérieur (1) cette image en association avec le troisième résultat (R'a/Rb)(c) et en ce qu'il consiste, au niveau du milieu extérieur (1) après réception de l'ensemble constitué par le troisième résultat et l'image du premier résultat, à séparer cette image et le troisième résultat, à élaborer, selon la même règle déterminée, l'image (I(Ra)) du résultat (Ra) contenu dans la table de contrôle depuis la dernière authentification de l'objet, puis à comparer ces deux images, pour autoriser, en cas de concordance, au moins momentanément l'accès à l'application gérée par le milieu extérieur, avant d'effectuer le déchiffrement du troisième résultat afin de confirmer l'authenticité de l'objet si le premier résultat extrait du déchiffrement correspond au résultat (Ra) contenu dans la table de contrôle depuis l'authentification précédente de cet objet.

6. Procédé selon la revendication 5, caractérisé en ce que l'image (R"a) du premier résultat (R'a) et celle (I(Ra)) du résultat (Ra) mémorisé dans la table de contrôle lors de la dernière authentification sont respectivement constituées par une partie de ces résultats qui sont donc identiques au cas ou l'objet est authentique.

7. Procédé selon la revendication 5, caractérisé en ce que l'image (R"a) du premier résultat (R'a) et celle (I(Ra)) du résultat (Ra) mémorisé lors de l'authentification précédente sont respectivement obtenues en effectuant une transformation de ces résultats.

8. Procédé selon la revendication 7, caractérisé en ce que la transformation, soit du premier résultat (Ra) en vue d'obtenir son image (R"a), soit du résultat mémorisé lors de l'authentification précédente, est réalisée en scindant ce résultat en au moins deux parties, et en effectuant une opération logique, telle qu'un OU EXCLUSIF, un ET, un OU, entre ces deux parties.

9. Procédé selon l'une quelconque des revendications précédentes, caractérisé en ce que le paramètre (Ea,Eb) élaboré par le milieu extérieur lors de la phase préliminaire ou lors des phases d'authentification, puis mémorisé dans la table de contrôle jusqu'à l'authentification suivante, est un nombre aléatoire.

10. Procédé selon l'une quelconque des revendications 1 à 9, caractérisé en ce que la donnée non secrète (Ni), propre à chaque objet, inscrite lors de la phase préliminaire dans la table de contrôle (11) puis retransmise lors de chaque authentification, pour retrouver les informations relatives à l'objet dans cette table, est le numéro de série de l'objet.

11. Procédé selon l'une quelconque des revendications 1 à 9, caractérisé en ce que la donnée non secrète (Ni), propre à chaque objet, est élaborée au moment de la phase préliminaire, par les circuits de traitement du milieu extérieur, avant d'être inscrite dans la table de contrôle et dans la mémoire de l'objet, sur requête des circuits de traitement du milieu extérieur (1).

12. Procédé selon l'une quelconque des revendications 1 à 11 précédentes, caractérisé en ce qu'il consiste à utiliser, pour le chiffrement, au niveau du terminal, des premier (R'a) et second (Rb) résultats, en vue d'obtenir le troisième résultat ([R'a/Rb][c]), et pour le déchiffrement de ce troisième résultat au niveau des circuits de traitement du milieu extérieur, un algorithme dissymétrique ou à clé publique.

13. Procédé selon l'une des revendications précédentes, caractérisé en ce qu'il consiste, dès qu'un objet est connecté au milieu extérieur, à faire organiser une phase de test par ce milieu, afin de reconnaitre l'organisation mémoire de cet objet et/ou de déterminer le type de programme qu'il contient, pour établir les dialogues ultérieurs de façon appropriée.

14. Système pour l'authentification d'un objet portatif, tel qu'une carte à microcircuits, comportant des circuits de traitement et une mémoire avec au moins une donnée secrète accessible par les seuls circuits de traitement de l'objet, et une donnée non secrète spécifique à cet objet, caractérisé en ce qu'il comporte au moins un terminal (4,5) relié à un milieu extérieur (1) par l'intermédiaire d'une ligne de transmission (2,3) quelconque, et en ce que le terminal et le milieu extérieur comportent des moyens pour la mise en oeuvre procédé selon l'une quelconque des revendications 1 à 13.

15. Système selon la revendication 14, caractérisé en ce qu'il constitue un réseau de traitement d'informations, structuré autour d'un calculateur constituant le milieu extérieur (1).
